# EUROPÄISCHE PATENTSCHRIFT

(11) **EP 0 566 737 B1**
(45) Veröffentlichungstag und Bekanntmachung des Hinweises auf die Patenterteilung: **17.04.1996**
(21) Anmeldenummer: 91919928.1
(22) Anmeldetag: 10.10.1991
(51) Int. Cl.: A23L 1/328

(54) **KAVIARÄHNLICHES NAHRUNGSMITTEL UND VERFAHREN ZUR DESSEN HERSTELLUNG**
CAVIAR LIKE FOODSTUFF AND METHOD OF MAKING IT
PRODUIT ALIMENTAIRE DU TYPE CAVIAR ET SON PROCEDE DE PRODUCTION

(43) Veröffentlichungstag der Anmeldung: 27.10.1993
(73) Patentinhaber: VAINERMAN, Efim Semenovich, Moscow, 117436 (SU); BAKARI, Tamara Ivanovna, Moscow 111538 (SU)
(72) Erfinder: VAINERMAN, Efim Semenovich, Moscow, 117436 (SU); BAKARI, Tamara Ivanovna, Moscow 111538 (SU)
(74) Vertreter: Smulders, Theodorus A.H.J., Ir.
(86) Internationale Anmeldenummer: SU9100203
(87) Internationale Veröffentlichungsnummer: WO9306751

(56) Entgegenhaltungen:
- CH-A- 497 851
- DE-A- 3 432 309
- FR-A- 2 564 292
- SU-A- 218 652
- DATABASE WPI Week 9318, Derwent Publications Ltd., London, GB; AN 93-150662 & SU-A-1 734 655 (SEVRYBTEKHTSENTR SCI PRODN ASSOC) 23. Mai 1992
- DATABASE WPI Week 8923, Derwent Publications Ltd., London, GB; AN 89-168652 & JP-A-1 108 961 (QP CORP) 26. April 1989

## Beschreibung

Die vorliegende Erfindung bezieht sich auf ein kaviarähnliches Nahrungsprodukt, nämlich den echten Kaviar von Stören, und ein Verfahren zu seiner Herstellung.

Die natürliche Gewinnung eines solchen wertvollen Delikatess-Nahrungsproduktes wie schwarzer und roter Kaviar von Stören und Lachsen nimmt wegen einer Verschlechterung der ökologischen Verhältnisse und einer dadurch hervorgerufenen Reduzierung der Lebensräume dieser Fische ab. Deshalb erfuhren zur Zeit verschiedene Methoden zur Herstellung von Nahrungsprodukten eine weite Verbreitung, die Analoga für den schwarzen und roten Naturkaviar darstellen.

Die bekannten Verfahren zur Herstellung von kaviarähnlichen Nahrungsprodukten unterscheiden sich durch die Qualität des verwendeten Eiweiss-Rohstoffes, die gelbildende Komponente, die Parameter des technologischen Prozesses und gestatten es, die genannten Produkte in Gestalt von Granalien oder Kapseln zu formieren.

Es ist ein Verfahren zur Herstellung eines kaviarähnlichen Nahrungsproduktes bekannt (GB, B, 2183985), das Kapseln einschliesst, welche aus Kalziumalginat-Hüllen bestehen, die mit einer viskosen Flüssigkeit und einem Ölmaterial in Form von zwei Phasen gefüllt sind. Das Verfahren besteht in der Zubereitung einer Emulsion, die sich aus viskoser Flüssigkeit, Ölmaterial und Kalziumsalz zusammensetzt; der Formierung von Kapseln durch Zutropfen der genannten Emulsion in die wässrige Kalziumalginatlösung und Umgeben der genannten tropfenförmigen Emulsion mit einer Hülle aus Kalziumalginat; der Spaltung der genannten Emulsion in Kapseln in viskose Flüssigkeit und Ölmaterial durch Erwärmung der Kapseln bei einer Temperatur über 45°.

Die viskose Flüssigkeit besteht aus der wässrigen Lösung eines Aschenmaterials, das aus der Gruppe gewählt ist: Xanthen-Terpentin, Terpentin von Früchten des Johannisbrotbaumes, Guarterpention, Gelatine und Karragenin. Als Ölmaterial verwendet man tierische und/oder pflanzliche Öle, die aus einer Gruppe gewählt sind, welche Sojaöl, Rapsöl, Fischtran und Schweineschmalz einschliesst.

Das gewonnene Nahrungsprodukt ist an den roten Kaviar von Lachsen nach der Textur, den Formhaltungseigenschaften, dem Gehalt an Wasser, das sich in der Kapsel während einer langen Zeit hält, maximal angenähert.

Jedoch besitzt das Nahrungsprodukt eine hinreichend grosse Abmessung der Kapsel, die bis zu 8 mm im Durchmesser beträgt, und eine gegenüber dem roten Naturkaviar höhere Festigkeit der Hülle wegen des Kalziumglukonats. Das Verfahren kennzeichnet sich durch die Mehrstufigkeit und eine komplizierte Durchführung der Kontrolle über die Qualität des hergestellten Produktes in den Zwischenstadien.

Bekannt ist ein Verfahren zur Herstellung eines dem Kaviar von Stören ähnlichen Nahrungsproduktes (SU, 1423098), das die Zubereitung eines Gemisches aus Albuminmilch, Gelatine, Geschmacksstoffzusätzen und schwarzem Lebensmittelfarbstoff in Form einer viskosen Flüssigkeit bei der Temperatur 95°, die tropfenweise Zuführung dieser Flüssigkeit in ein pflanzliches Speiseöl bei der Erhitzung des letzteren auf eine Temperatur von 110 bis 150°C und die Formierung gallertartiger Körner während 7 bis 20 s umfasst. Die hergestellten Körner taucht man in die untere Schicht des auf die Temperatur von 15°C abgekühlten pflanzlichen Öls zur Härtung ein. Die gehärteten Körner unterwirft man einer kulinarischen Behandlung durch ein Gemisch aus Askorbinsäure, Fischtran, Maisöl und Kochsalz.

Das nach diesem Verfahren hergestellte Nahrungsprodukt besitzt eine feste, durch Gelatine formierte Hülle, kennzeichnet sich durch nicht genügend gute organoleptische Eigenschaften wegen eines geringen Fettgehaltes (1,2 bis 2,5%) in des Albuminmilch und wegen einer schlechten Durchsichtigkeit des Korns. Ein derartiges Nahrungsprodukt weist keine weiche und zarte Konsistenz und keine erforderliche Farbe auf, d.h., es entspricht qualitätsmässig nicht dem schwarzen Naturkaviar von Stören.

Das Verfahren ist durch einen hohen Energieaufwand gekennzeichnet und erlaubt es nicht, die Qualität des hergestellten Produktes wegen der Anwendung von hohen Temperaturen zu kontrollieren.

Der Erfindung liegt die Aufgabe zugrunde, ein kaviarähnliches Nahrungsprodukt, das nach seinen Eigenschaften an den schwarzen Naturkaviar von Stören maximal angenähert ist, anzugeben und ein Verfahren zu seiner Herstellung durch entsprechende Auswahl von Komponenten, durch Änderung von Bedingungen für die Zubereitung ihres Gemisches und die Formierung des Nahrungsproduktes zu entwickeln, welches es gestatten würde, die Qualität des hergestellten Zielproduktes durch Verbesserung seiner organoleptischen Eigenschaften bei einer erheblichen Vereinfachung des technologischen Prozesses zu erhöhen.

Die Aufgabe wird dadurch gelöst, dass ein kaviarähnliches Nahrungsprodukt vorgeschlagen wird, das Granalien, welche eine Aussenschicht aus denaturiertem Eiweiss und eine Innenschicht aufweisen, die aus einer im Aggregatzustand beständigen Emulsion besteht, welche durch nicht denaturiertes Eiweiss, Eigelb, Ölmaterial und Lebensmittelfarbstoff gebildet ist, bei dem folgenden Verhältnis der die Granalien bildenden Komponenten (Masse-%) enthält:

| | |
|---|---|
| Eiweiss | 13-30 |
| Eigelb | 45-71 |
| Ölmaterial | 9,0-30 |
| Lebensmittelfarbstoff | 1,0-3,0 |

Das erfindungsgemäss vorgeschlagene Nahrungsprodukt ist dank der Einführung von Eiweiss und Eigelb, Ölmaterial in dasselbe nach der qualitativen Zusammensetzung von wertvollen Eiweissstoffen, Fett, Vitaminen und Spuranelementen maximal an den schwarzen Naturkaviar von Stören angenähert. Es kennzeichnet sich durch vortreffliche Formhaltungs-Eigenschaften, hat ein helles Korn mit 2,5 bis 3 mm Durchmesser von erforderlicher Farbe und weicher zarter Konsistenz im Geschmack, das heisst, es stellt nach seinen organoleptischen Eigenschaften ein Analogon für den schwarzen Kaviar dar. Das pasteurisierte und in Büchsen verpackte Nahrungsprodukt gemäss der Erfindung halt eine lange Aufbewahrungszeit aus. Beispielsweise behält es bei der Aufbewahrung in einem Kühler im Laufe von 6 Monaten vortreffliche Geschmackseigenschaften bei.

Es ist zweckmässig, dass das genannte Ölmaterial mindestens ein tierisches und/oder pflanzliches Öl darstellt, gewählt aus der Gruppe: Olivenöl, Sojaöl, Sonnenblumenöl, Maisöl, Fischtran, Margarine, Butter.

Solch ein Ölmaterial sichert der Emulsion, die die Innenschicht der Granalie bildet, eine Viskosität, die der Viskosität der Kaviarkörner sehr nahekommt und die organoleptischen Eigenschaften des Nahrungsproduktes nicht verschlechtert.

Zweckmässig ist, dass das genannte Ölmaterial einen fettlöslichen Geschmacksstoffzusatz enthält, der in einer Menge von 2 bis 10% der Gesamtmasse der genannten, die Granalien bildenden Komponenten genommen ist. Zur Verbesserung der Geschmackseigenschaften des Nahrungsproduktes und Gewährleistung der Beständigkeit der die Innenschicht der Granalie bildenden Emulsion im Aggregatzustand ist es zweckmässig, dass das Ölmaterial Kochsalz in einer Menge von 3 bis 10% der Gesamtmasse der genannten, die Granalien bildenden Komponenten enthält.

Die Aufgabe wird auch dadurch gelöst, dass ein Verfahren zur Herstellung eines kaviarähnlichen Nahrungsproduktes vorgeschlagen wird, das die Zubereitung eines Gemisches von Komponenten in Form einer viskosen Flüssigkeit und die tropfenweise Zuführung dieser Flüssigkeit in ein pflanzliches Speiseöl bei dessen Erhitzung umfasst, bei welchem Verfohren man erfindungsgemäss als Komponenten Eiweiss, Eigelb, Ölmaterial und Lebensmittelfarbstoff verwendet und ihr Gemisch durch Erwärmung des in einer Menge von 13 bis 30 Masse-% genommenen Eiweisses auf eine Temperatur nicht untei 35°C und durch Einführung in dasselbe von Eigelb, Ölmaterial und Lebensmittelfarbstoff, die in einem Massenverhältnis von jeweils 45-71:9, 0-30:1, 0-3,0 genommen sind, bis zur Bildung einer im Aggregatzustand beständigen Emulsion in Form einer viskosen Flüssigkeit zubereitet, die erhaltene Emulsion tropfenweise dem pflanzlichen Speiseöl, dessen Temperatur man im Intervall von 80 bis 95°C aufrechterhält, zuführt und die Granalien des Zielproduktes formiert.

Die Durchführung des Verfahrens unter derartigen Temperaturverhältnissen bei Verwendung von Komponenten solch einer qualitativen und quantitativen Zusammensetzung bietet die Möglichkeit, ein Nahrungsprodukt in Form von Granalien zu erhalten, die nach der Struktur den Körnern des schwarzen Naturkaviars von Stören ähnlich sind. Im Unterschied zu den Kapseln stellen die Granalien ein einheitlliches Ganzes dar, d.h., sie sind durch eine im Aggregatzustand beständige Emulsion mit zäher Konsistenz gebildet, wobei die Struktur der Emulsion im peripheren Teil der Granalie aufgrund der Genaturierung des Eiweisses dicht und fest wird. Gerade die Bildung einer gelförmigen Struktur aus dem Eiweiss in der Oberflächenschicht des Emulsionstropfens bedingt das Vorhandensein zweier Schichten der oben genannten Zusammensetzung. Die Granalien bilden sich dank den Kräften der Oberflächenspannung beim Gelangen des Tropfens der viskosen Emulsion, die durch ein Gemisch von Komponenten gebildet ist, in das erhitzte pflanzliche Speiseöl.

Die Zusammensetzung der Komponenten wird durch die Notwendigkeit bedingt, eine viskose, im Aggregatzustand beständige Emulsion zu erhalten. Bei Verwendung des Eiweisses in einer Menge von unter 13 Masse-% wird die Formbeständigkeit der Granalie eingebüsst, es verschlechtern sich die Geschmackseigenschaften des Nahrungsproduktes. Bei Vergrösserung des Eiweissgehaltes im Nahrungsprodukt über 30 Masse-% hinaus wird die Granalie dichter, es verschwindet die Weichheit und Zartheit ihres Geschmacks, es erscheint eine weissliche Tönung, d.h., es verschiechtert sich das handelsübliche Aussehen.

Die Verminderung des Eigelbgehaltes unter 45 Masse-% verringert den Kalorienwert des Nahrungsproduktes, und die Vergrösserung des Gehaltes über 71 Masse-% hinaus führt zum Verlust der Formbeständigkeit der Granalie und zur Verschlechterung der Geschmackseigenschaften des Produktes.

Das Ölmaterial, als welches zweckmässigerweise mindestens ein tierisches und/oder pflanzliches Öl zu verwenden ist, gewählt aus der Gruppe: Olivenöl, Sojaöl, Sonnenblumenöl, Maisöl, Fischtran, Margarine, Butter, sichert dem Nahrungsprodukt die erforderliche Menge an vollwertigem Fett, verleiht ihm eine zarte Konsistenz, gestattet es dem Gemisch von Komponenten, die Form einer im Aggregatzustand beständigen Emulsion zu haben. Daher verschlechtern sich bei Verminderung seines Gehaltes unter 9,0 Masse-% die organoleptischen Eigenschaften des Nahrungsproduktes beträchtlich, und bei einem Gehalt über 30 Masse-% findet eine Entmischung der die Innenschicht in der Granalie bildenden Emulsion statt.

Den Lebensmittelfarbstoff verwendet man in einer Menge von 1,0-3,0 Masse-% in Abhängigkeit von der Intensität der Farbe, die vom Nahrungsprodukt im Vergleich mit dem Naturkaviar von Hausen, Sternhausen und Stören gefordert wird.

Wird aus dem Gemisch von Komponenten eine im Aggregatzustand beständige Emulsion mit zäher Konsistenz zubereitet, wärmt man das Eiweiss auf eine Temperatur von mindestens 35°C, die vorwiegend im Intervall zwischen 35 und 45°C liegt, vor und führt dann in dasselbe Eigelb, Ölmaterial und Lebensmittelfarbstoff in dem vorstehand angegebenen Massenverhältnis ein. Bei der genannten Temperatur kommt es noch nicht dazu, dass das Eiweiss beginnt, denaturiert zu werden, wobei optimale Bedingungen für die Verteilung der Komponenten in der Gesamtmasse des Gemisches und für dessen Homogenisierung geschaffen werden und im weiteren eine schnellere Granulierung der Gemischtropfen im erhitzten pflanzlichen Speiseöl gewährleistet wird.

Um späterhin eine kulinarische Behandlung des hergestellten Nahrungsproduktes auszuschliessen, ist es zweckmässig, in das Ölmaterial einen fettlöslichen Geschmacksstoffzusatz in einer Menge von 2 bis 10% und/oder 3 bis 10% Kochsalz einzuführen, die von der Gesamtmasse der die Granalie bildenden Komponenten genommen sind. Als Geschmacksstoffzusatz können Heringsmilch, Milch von Lachsen, Salzkilche verwendet werden. Das Ölmaterial vermischt man sorgfältig mit dem Geschmacksstoffzusatz oder Kochsalz, wünschenswerterweise bis zur Bildung einer gleichartigen homogenen Masse, seiht man auf einem Sieb und gibt dem erwärmten Eiweiss zu. Es sei bemerkt, dass die Vermischung bei der Zubereitung des Gemisches von Komponenten entweder im Prozess ihrer Einführung in das Eiweiss oder nach der Einführung bewerkstelligt werden kann. Da man die Zubereitung des Gemisches während einer Zeitspanne durchführt, die eine Kühlung des Gemisches unter 35°C ausschliesst, läuft der Prozess der Granulierung der Tropfen des Gemisches in Form einer viskosen Emulsion in dem auf eine Temperatur von 80 bis 95°C erhitzten pflanzlichen Öl so schnell ab, dass nur ein Teil des Eiweisses noch Zeit hat, denaturiert zu werden, und die Emulsion behält, ohne die Beständigkeit im Aggregatzustand eingebüsst zu haben, ihre Eigenschaften bereits in der Granalie bei. Bei einer Temperatur unter 80°C geht die Formbeständigkeit der Granalie in hohem Masse verloren, sie wird leicht zerstört, und bei einer Temperatur oberhalb von 95°C wird die Granalie hart, der Farbstoff entfärbt sich, es verschlechtern sich die organoleptischen Eigenschaften des Hahrungsproduktes. Die Zuführung der Tropfen des Komponentengemisches erfolgt mit Hilfe eines metallischen Kapillarröhrchens durch die Grenzfläche "erhitztes pflanzliches Öl - Luft" hindurch. Die Zuführungsgeschwindigkeit durch das Kapillarröhrchen hindurch wählt man unter Berücksichtigung der Viskosität des Kompnentengemisches, die durch das Massenverhältnis der Kompnenten bestimmt wird, derart, dass eine Zerstörung der Tropfen beim Aufschlag auf die Oberfläche vermieden wird. Es ist erwünscht, dass das pflanzliche Öl im Behälter zirkuliert, wo die Formierung der Granalien vonstatten geht, und in Anbetracht seiner Neigung zum Ranzigwerden und zur Verschlechterung des Geschmacks des hergestellten Nahrungsproduktes mit neuen Portionen verdünnt wird. Durch den Strom des pflanzlichen Öles werden die Granalien aus dem Behälter auf das Sieb zur Abrennung von dem Öl ausgetragen. Nötigenfalls unterwirft man das gewonnene Nahrungsprodukt einer kulinarischen Behandlung. Dazu vermischt man das erfindungsgemässe Nahrungsprodukt mit einem Homogenat aus Mintaileber, Lachsmilch und Fischtran oder mit einem Homogenat aus Dorschleber im eigenen Saft. Das hergestellte Nahrungsprodukt ist nach seinen Eigenschaften an den schwarzen Naturkaviar von Stören maximal angenähert. Das Verfahren gemäss der Erfindung zeichnet sich durch eine einfache Technologie aus und schliesst nur zwei Stadien ein. Es erfordert keinen hohen Energieaufwand und keine komplizierten Ausrüstungen. Die Qualität des hergestellten Nahrungsproduktes lässt sich in jedem dieser Stadien leicht kontrollieren.

Einem Behälter mit Mischer führt man 210 g Eiweiss, das auf die Temperatur von 40°C erwärmt ist, zu und führt man dann in das Eiweiss 650 g Eigelb und 10 g schwarzen Lebensmittelfarbstoff unter Rühren ein. Vorläufig bereitet man ein Gemisch aus 65 g desodoriertem Sonnenblumenöl, 65 g Dorschtran, 20 g Heringsmilch und 30 g Kochsalz zu, welches Gemisch man bis zur Bildung einer homogenen Masse zerreibt. Die homogene Masse seiht man auf einem Sieb und leitet in das Gemisch von Komponenten unter Rühren bis zur Bildung einer viskosen, im Aggregatzustand beständigen Emulsion ein. Die erhaltene Emulsion führt man tropfenweise durch ein metallisches Kapillarröhrchen mit 2,0 mm Durchmesser einer Kolonne mit darin zirkulierendem, auf die Temperatur 89°C erhitzten Maisöl zu. Die Zuführungsgeschwindigkeit beträgt 150 Tropfen in der Minute. Die formierten sphärischen Granalien, 2,5 mm gross im Durchmessser, werden durch das Öl auf das Sieb zum Abfliessen des Öls ausgetragen.

Das hergestellte Nahrungsprodukt, das dem Kaviar von Sternhausen ähnlich ist, enthält Granalien, die eine Aussenschicht aus denaturiertem Eiweiss und eine Innenschicht aus einer viskosen, im Aggregatzustand beständigen Emulsion besitzen, die durch nachstehend angeführte Komponenten bei deren folgendem Verhältnis (Masse-%) gebildet ist:

| | |
|---|---|
| Eiweiss | 21 |
| Eibelb | 65 |
| schwarzer Lebensmittelfarbstoff Ölmaterial | 1,0 |
| fettlöslicher Geschmacksstoffzusatz, genommen in einer Menge von 2 Masse-% Kochsalz, genommen in einer Menge von 3 Masse-% | 13 |

Der genannte Zusatz und das Kochsalz sind im Ölmaterial aufgelöst, und ihre Menge ist für die Gesamtmasse von Eiweiss, Eigelb, Ölmaterial und schwarzem Lebensmittelfarbstoff ausgelegt. Das Nahrungsmittel ist im Aussehen und Geschmack dem schwarzen Kaviar von Sternhausen ähnlich.

Nachstehend werden andere Ausführungsbeispiele der Erfindung angeführt.

### Beispiel 1

Einem Behälter mit Mischer führt man 130 g Eiweiss, das auf die Temperatur von 38°C erwärmt ist, zu, wornach man in das Eiweiss 710 g Eigelb und 30 g schwarzen Lebensmittelfarbstoff unter Rühren einführt. Vorläufig bereitet man ein Gemisch aus 80 g Sojaöl, 50 g Margarine und 100 g Salzkilche zu, welches Gemisch man bis zur Bildung einer homogenen Masse zerreibt. Die homogene Masse seiht man auf einem Sieb und leitet in das Gemisch von Komponenten unter Rühren bis zur Bildung einer viskosen, im Aggregatzustand beständigen Emulsion ein. Die erhaltene Emulsion führt man tropfenweise durch ein metallisches Kapillarröhrchen mit 2,5 mm Durchmesser einer Kolonne mit darin zirkulierendem, auf die Temperatur 90°C erhitzten Maisöl zu. Die Zuführungsgeschwindigkeit beträgt 150 Tropfen in der Minute. Die formierten sphärischen Granalien, 3 mm gross im Durchmesser, werden von dem Öl auf das Sieb zum Abfliessen des Öls ausgetragen.

Das hergestellte Nahrungsprodukt, das dem Kaviar von Stören ähnlich ist, enthält Granalien, die eine Aussenschicht aus denaturiertem Eiweiss und eine Innenschicht aus einer viskosen Emulsion besitzen, die durch unten genannte Komponenten bei deren folgendem Verhältnis (Masse-%) gebildet ist.

| | |
|---|---|
| Eiweiss | 13 |
| Eigelb | 71 |
| schwarzer Lebensmittelfarbstoff | 3,0 |
| Ölmaterial fettlöslicher Geschmacksstoffzusatz, genommen in einer Menge von 10% der Gesamtmasse von Eiweiss, Eigelb, Ölmaterial und schwarzem Lebensmittelfarbstoff | 13 |

Das Nahrungsmittel ist im Aussehen und Geschmack dem schwarzen Kaviar von Stören ähnlich.

### Beispiel 2

Einem Behälter mit Mischer führt man 300 g Eiweiss, das auf die Temperatur von 45°C erwärmt ist, zu, wonach man in das Eiweiss 600 g Eigelb und 10 g schwarzen Lebensmittelfarbstoff unter Rühren einführt. Vorläufig bereitet man ein Gemisch aus 45 g Butter, 45 g Lachstran und 100 g Kochsalz zu, welches Gemisch man bis zumvollständigen Auflösen des Salzes zerreibt. Das genannte Ölmaterial mit dem darin aufgelösten Salz leitet man in das Gemisch von Komponenten unter Rühren bis zur Bildung einer viskosen, im Aggregatzustand beständigen Emulsion ein. Die erhaltene Emulsion führt man tropfenweise durch ein metallisches Kapillarröhrchen mit 2,5 mm Durchmesser einer Kolonne mit darin zirkulierendem, auf die Temperatur 95°C erhitzten Sojaöl zu. Die Zuführungsgeschwindigkeit beträgt 130 Tropfen in der Minute. Die formierten sphärischen Granalien, 3 mm gross im Durchmesser, werden von dem Öl auf das Sieb zum Abfliessen des Öls ausgetragen, worauf sie einer kulinarischen Behandlung unterworfen werden.

Man bereitet ein Homogenat aus 50 g Dorschleber im eigenen Saft zu und vermischt es mit den Granalien.

Das hergestellte Nahrungsprodukt, das dem Kaviar von Sternhausen ähnlich ist, enthält Granalien, die eine Aussenschicht aus denaturiertem Eiweiss und eine Innenschicht besitzen, die von der viskosen Emulsion aus den unten aufgezählten Komponenten bei deren folgendem Verhältnis (Masse-%) gebildet ist:

| | |
|---|---|
| Eiweiss | 30 |
| Eigelb | 60 |
| schwarzer Lebensmittelfarbstoff | 1,0 |
| Ölmaterial Kochsalz, genommen in einer Menge von 10% der Gesamtmasse von Eiweiss, Eigelb, Ölmaterial und schwarzem Lebensmittelfarbstoff. | 9,0 |

Das Nahrungsmittel ist im Aussehen und Geschmack dem schwarzen Kaviar von Sternhausen ähnlich.

### Beispiel 3

Einem Behälter mit Mischer führt man 250 g Eiweiss, das auf die Temperatur von 35°C erwärmt ist, zu, wonach man in das Eiweiss 450 g Eigelb und 10 g schwarzen Lebensmittelfarbstoff unter Rühren einführt. Vorläufig bereitet man ein Gemisch aus 300 g Anschovistran und 60 g Heringsmilch zu, welches Gemisch man bis zur Bildung einer homogenen Masse zerreibt. Die homogene Masse seiht man auf einem Sieb und leitet dem Vermischen mit den vorgenannten Komponenten bis zur Bildung einer viskosen, im Aggregatzustand beständigen Emulsion zu. Die erhaltene Emulsion führt man tropfenweise durch ein metallisches Kapillarröhrchen mit 2,5 mm Durchmesser einer Kolonne mit darin zirkulierendem, auf die Temperatur 87°C erhitzten Maisöl zu. Die Zuführungsgeschwindigkeit beträgt 140 Tropfen in der Minute. Die formierten sphärischen Granalien, 3 mm gross im Durchmesser, werden vom Öl auf das Sieb zum Abfliessen des Öls ausgetragen.

Das hergestellte Nahrungsprodukt, das dem Kaviar von Sternhausen ähnlich ist, enthält Granalien, die eine Aussenschicht aus denaturiertem Eiweiss und eine Innenschicht aus einer viskosen Emulsion besitzen, die durch die unten genannten Komponenten bei deren folgendem Verhältnis (Masse-%) gebildet ist:

| | |
|---|---|
| Eiweiss | 25 |
| Eigelb | 45 |
| schwarzer Lebensmittelfarbstoff | 1,0 |
| Ölmaterial fettlöslicher Geschmacksstoffzusatz, genommen in einer Menge von 6% der Gesamtmasse von Eiweiss, Eigelb, Ölmaterial und schwarzem Lebensmittelfarbstoff. | 30 |

Das Nahrungsmittel ist im Aussehen und Geschmack dem schwarzen Kaviar von Sternhausen ähnlich.

### Beispiel 4

200 g Eiweiss, das auf die Temperatur von 35°C erwärmt ist, führt man einem Behälter mit Mischer zu. In den mit dem Eiweiss gefüllten Behälter führt man 600 g Eigelb, 180 g Anschovistran und 20 g schwarzen Lebensmittelfarbstoff ein und nimmt deren Vermischung bis zur Bildung einer viskosen, im Aggregatzustand beständigen Emulsion vor. Die erhaltene Emulsion führt man tropfenweise durch ein metallisches Kapillarröhrchen mit 2,5 mm Durchmesser einer Kolonne mit zirkulierendem Olivenöl zu, wobei man seine Temperatur in der Kolonne gleich 80°C aufrechterhält und im Oberteil der Kolonne ein Luftraum vorhanden ist. Die Zuführungsgeschwindigkeit beträgt 150 Tropfen in der Minute. Die formierten sphärischen Granalien, 3 mm gross im Durchmesser, werden von dem Öl auf das Sieb zum Abfliessen des Öls ausgetragen, worauf sie einer kulinarischen Behandlung unterworfen werden. Man bereitet ein Homogenat aus 20 g Mintaileber, 20 g Lachsmilch und 10 g Fischtran zu und vermischt es mit Granalien.

Das hergestellte Nahrungsprodukt, das dem Kaviar von Sternhausen ähnlich ist, enthält bernsteinfarbenschwarze Granalien, die eine Aussenschicht aus denaturiertem Eiweiss und eine Innenschicht aus einer viskosen Emulsion besitzen, die durch unten aufgezählte Komponenten bei deren folgendem Verhältnis (Masse-%) gebildet ist:

| | |
|---|---|
| Eiweiss | 20 |
| Eigelb | 60 |
| Anschovistran | 18 |
| schwarzer Lebensmittelfarbstoff | 2,0 |

Das Nahrungsprodukt ist im Aussehen und Geschmack dem schwarzen Kaviar von Sternhausen ähnlich.

Die vorgeschlagene Erfindung wird in der Lebensmittelindustrie zur Herstellung eines hochwertigen Delikatess-Nahrungsproduktes, das dem Naturkaviar von Stören ähnlich ist, Anwendung finden.

## Patentansprüche

1. Kaviarähnliches Nahrungsprodukt, das Granalien, welche eine Aussenschicht aus denaturiertem Eiweiss und eine Innenschicht besitzen, die aus einer im Aggregatzustand beständigen Emulsion bestent, die durch nicht denaturiertes Eiweiss, Eigelb, Ölmaterial und Lebensmittelfarbstoff gebildet ist, bei dem folgenden Verhältnis der die Granalien bildenden Komponenten (Masse-%) enthält:
| | |
|---|---|
| Eiweiss | 13-30 |
| Eigelb | 45-71 |
| Ölmaterial | 9,0-30 |
| Lebensmittelfarbstoff | 1,0-3,0. |

2. Kaviarähnliches Nahrungsprodukt nach Anspruch 1, dadurch **gekennzeichnet,** dass das genannte Ölmaterial mindestens ein tierisches und/oder pflanzliches Öl darstellt, gewählt aus der Gruppe: Olivenöl, Sojaöl, Sonnenblumenöl, Maisöl, Fischtran, Margarine, Butter.

3. Kaviarähnliches Nahrungsprodukt nach Anspruch 1, 2, dadurch **gekennzeichnet,** dass das genannte Ölmaterial einen fettlöslichen Geschmacksstoffzusatz enthält, genommen in einer Menge von 2 bis 10% der Gesamtmasse der genannten, die Granalien bildenden Komponenten.

4. Kaviarähnliches Nahrungsprodukt nach den Ansprüchen 1 bis 3, dadurch **gekennzeichnet,** dass das genannte Ölmaterial Kochsalz in einer Menge von 3 bis 10% der Gesamtmasse der genannten, die Granalien bildenden Komponenten enthält.

5. Verfahren zur Herstellung eines kaviarähnlichen Nahrungsproduktes nach Anspruch 1, das die Zubereitung eines Gemisches von Komponenten in Form einer viskosen Flüssigkeit und die tropfenweise Zuführung dieser Flüssigkeit in ein pflanzliches Speiseöl bei dessen Erhitzung umfasst, dadurch **gekennzeichnet,** dass man als Komponenten Eiweiss, Eigelb, Ölmaterial und Lebensmittelfarbstoff verwendet und ihr Gemisch durch Erwärmung des in einer Menge von 13 bis 30 Masse-% genommenen Eiweisses auf eine Temperatur nicht unter 35°C und durch Einführung in dasselbe von Eigelb, Ölmaterial und Lebensmittelfarbstoff, die in einem Massenverhältnis von jeweils 45-71:9,0-30:1,0-3,0 genommen sind, bis zur Bildung einer viskosen, im Aggregatzustand beständigen Emulsion zubereitet, die erhaltene Emulsion tropfenweise dem pflanzlichen Speiseöl, dessen Temperatur man im Intervall von 80 bis 95°C aufrechterhält, zuführt und die Granalien des Zielproduktes formiert.

6. Verfahren nach Anspruch 5, dadurch **gekennzeichnet,** dass man das Eiweiss auf eine Temperatur erwärmt, die im Intervall zwischen 35 und 45°C liegt.

7. Verfahren nach Anspruch 5,6, dadurch **gekennzeichnet,** dass man ein Ölmaterial verwendet, das mindestens ein tierisches und/oder pflanzliches Öl enthält, gewählt aus der Gruppe: Olivenöl, Sojaöl, Sonnenblumenöl, Maisöl, Fischtran, Margarine, Butter.

8. Verfahren nach Anspruch 5, dadurch **gekennzeichnet,** dass man vor der Einführung des genannten Ömaterials in das Eiweiss diesem einen fettlöslichen Geschmacksstoffzusatz zugibt, genommen in einer Menge von 2 bis 10% der Gesamtmasse von die Granalien bildenden Komponenten.

9. Verfahren nach Anspruch 5, dadurch **gekennzeichnet,** dass man vor der Einführung des genannten Ölmaterials in das Eiweiss diesem Kochsalz zugibt, genommen in einer Menge von 3 bis 10% der Gesamtmasse von die Granalien bildenden Komponenten.

## Claims

1. Caviar-like food product containing granules which have an outer layer of denatured albumen and an inner layer comprising an emulsion which is stable in the aggregate state and is formed from non-denatured albumen, yolk, oil material and food colour in the following ratio of components forming the granules (mass %):
| | |
|---|---|
| albumen | 13-30 |
| yolk | 45-71 |
| oil material | 9.0-30 |
| food colour | 1.0-3.0 |

2. Caviar-like food product according to claim 1, characterised in that the said oil material is at least one animal and/or vegetable oil chosen from the group comprising olive oil, soya oil, sunflower oil, corn oil, fish oil, margarine, butter.

3. Caviar-like food product according to claim 1,2, characterised in that the said oil material contains a fat-soluble flavouring used in a quantity of 2 to 10% of the total mass of the said components forming the granules.

4. Caviar-like food product according to claims 1 to 3, characterised in that the said oil material contains common salt in a quantity of 3 to 10% of the total mass of the said components forming the granules.

5. A process for the preparation of a caviar-like food product according to claim 1 which comprises the preparation of a mixture of components in the form of a viscous liquid and the dropwise introduction of said liquid into an edible vegetable oil during the heating thereof, characterised in that the components used are albumen, yolk, oil material and food colour and the mixture thereof is prepared by heating the albumen used in a quantity of 13 to 30 mass % to a temperature of not less than 35 °C and by introducing into said albumen yolk, oil material and food colour which are used in a mass ratio of 45-71:9.0-30:1.0-3.0 in each case, until the formation of a viscous emulsion which is stable in the aggregate state, the emulsion obtained is introduced dropwise into the edible vegetable oil, the temperature of which is maintained in the interval of 80 to 95 °C, and the granules of the intended product are formed.

6. A process according to claim 5, characterised in that the albumen is heated to a temperature which lies in the interval between 35 and 45 °C.

7. A process according to claim 5, 6, characterised in that an oil material is used which contains at least one animal and/or vegetable oil chosen from the group comprising olive oil, soya oil, sunflower oil, corn oil, fish oil, margarine, butter.

8. A process according to claim 5, characterised in that, before the introduction of the said oil material into the albumen, a fat-soluble flavouring is added to said oil in a quantity of 2 to 10% of the total mass of the components forming the granules.

9. A process according to claim 5, characterised in that, before the introduction of the said oil material into the albumen, common salt is added to said oil in a quantity of 3 to 10% of the total mass of the components forming the granules.

## Revendications

1. Produit alimentaire ressemblant à du caviar qui contient des granules qui possèdent une couche externe de blanc d'oeuf dénaturé et une couche interne qui se compose d'une émulsion restant à l'état d'agrégat qui est formée de blanc d'oeuf non dénaturé, de jaune d'oeuf, de matières d'huile et d'un colorant alimentaire, à la proportion suivante des composants formant les granules (% en poids) :
| | |
|---|---|
| Blanc d'oeuf | 13-30 |
| Jaune d'oeuf | 45-71 |
| Matière d'huile | 9,0-30 |
| Colorant alimentaire | 1,0-3,0 |

2. Produit alimentaire ressemblant à du caviar selon la revendication 1, caractérisé en ce que ladite matière d'huile représente au moins une huile animale et/ou végétale choisie dans le groupe : huile d'olive, huile de soja, huile de tournesol, huile de maïs, huile de foie de morue, margarine, beurre.

3. Produit alimentaire ressemblant à du caviar selon la revendication 1, 2, caractérisé en ce que ladite matière d'huile contient un additif aromatisant soluble dans les matières grasses, pris en une quantité de 2 à 10% de toute la masse desdits composants formant les granules.

4. Produit alimentaire ressemblant à du caviar selon les revendications 1 à 3, caractérisé en ce que ladite matière d'huile contient du sel de cuisine en une quantité de 3 à 10% du poids total desdits composants formant les granules.

5. Procédé pour la production d'un produit alimentaire ressemblant à du caviar selon la revendication 1 qui comporte la préparation d'un mélange de composants sous la forme d'un liquide visqueux et l'amenée goutte à goutte de ce liquide dans une huile alimentaire végétale en la chauffant, caractérisé en ce qu'on utilise en tant que composants, du blanc d'oeuf, du jaune d'oeuf, de la matière d'huile et un colorant alimentaire, et on prépare leur mélange en chauffant le blanc d'oeuf pris en une quantité de 13 à 30% en poids à une température qui n'est pas en dessous de 35°C et par introduction, dans celui-ci, du jaune d'oeuf, de la matière d'huile et du colorant alimentaire qui sont pris en une proportion en poids de 45-71:9,0-30:1,0-3,0 jusqu'à la formation d'une émulsion visqueuse restant à l'état d'agrégat, l'émulsion obtenue est introduite goutte à goutte dans l'huile alimentaire végétale dont la température est maintenue dans un intervalle entre 80 et 85°C et les granules du produit voulu sont formés.

6. Procédé selon la revendication 5, caractérisé en ce qu'on chauffe le blanc d'oeuf à une température qui se trouve entre 35 et 45°C.

7. Procédé selon la revendication 5, 6, caractérisé en ce qu'on utilise une matière d'huile qui contient au moins une huile animale et/ou végétale choisie dans le groupe : huile d'olive, huile de soja, huile de tournesol, huile de maïs, huile de foie de morue, margarine, beurre.

8. Procédé selon la revendication 5, caractérisé en ce qu'on ajoute, avant introduction de ladite matière d'huile dans le blanc d'oeuf, un additif aromatisant soluble dans la matière grasse, pris en une quantité de 2 à 10% du poids total des composants formant les granules.

9. Procédé selon la revendication 5, caractérisé en ce qu'avant l'introduction de ladite matière d'huile dans le blanc d'oeuf, on y ajoute du sel de cuisine, pris en une quantité de 3 à 10% du poids total des composants formant les granules.
